# EUROPÄISCHE PATENTSCHRIFT

(11) **EP 4 069 560 B1**
(45) Veröffentlichungstag und Bekanntmachung des Hinweises auf die Patenterteilung: **09.08.2023**
(21) Anmeldenummer: 20817274.2
(22) Anmeldetag: 01.12.2020
(51) Int. Cl.: B60T 13/68

(54) **AUSFALLSICHERHEITSVENTILEINHEIT FÜR EINE PARKBREMSFUNKTION SOWIE PARKBREMSVENTILANORDNUNG**
FAIL SAFE VALVE FOR PARKING BRAKE FUNCTION AND PARKING BRAKE VALVE ARRANGEMENT
SOUPAPE FAIL-SAFE POUR FREIN DE STATIONNEMENT ET AGENCEMENT DE VENTIL D'UN FREIN DE STATIONNEMENT

(30) Priorität: 04.12.2019 DE 102019133010
(43) Veröffentlichungstag der Anmeldung: 12.10.2022
(73) Patentinhaber: ZF CV Systems Global GmbH, 3006 Bern (CH)
(72) Erfinder: VAN THIEL, Julian, 30938 Grossburgwedel (DE); WULF, Oliver, 31535 Neustadt (DE)
(74) Vertreter: Ohlendorf, Henrike
(86) Internationale Anmeldenummer: PCT/EP2020/084042
(87) Internationale Veröffentlichungsnummer: WO 2021/110639

(56) Entgegenhaltungen:
- EP-A2- 2 133 247
- DE-A1- 10 062 625
- DE-A1-102007 023 345
- DE-A1-102015 216 214
- DE-A1-102016 010 463

## Beschreibung

Die vorliegende Erfindung betrifft eine Ausfallsicherheitsventileinheit für eine Parkbremsfunktion eines elektronisch steuerbaren pneumatischen Bremssystems für ein Nutzfahrzeug, wobei die Ausfallsicherheitsventileinheit ein monostabiles Löseventil und ein Entlüftungsventil aufweist.

Die Erfindung betrifft ferner eine Parkbremsventilanordnung für ein elektronisch steuerbares pneumatisches Bremssystem für ein Nutzfahrzeug mit einer derartigen Ausfallsicherheitsventileinheit sowie ein Fahrzeug, insbesondere Nutzfahrzeug, mit einem elektronisch steuerbaren pneumatischen Bremssystem und einer Parkbremsventilanordnung der vorstehend genannten Art.

In modernen elektronisch steuerbaren pneumatischen Bremssystemen, die insbesondere bei Nutzfahrzeugen eingesetzt werden, die für einen autonomen Fahrbetrieb vorgesehen sind, ist es wichtig, Maßnahmen bereitzustellen, die bei einem Fehler in dem Bremssystem dennoch ein sicheres Verzögern des Nutzfahrzeugs zulassen. Hier gibt es Ansätze, vollständig redundante Bremssysteme einzusetzen, teilweise redundante Bremssysteme oder nur verschiedene Ebenen in einem Bremssystem, sodass bei einem Fehler in einer ersten Ebene das Bremssystem in einer zweiten Ebene wenigstens eingeschränkt weiterbetrieben werden kann.

Tritt jedoch beispielsweise ein Doppelfehler auf, der sowohl das primäre Bremssystem als auch das redundante Bremssystem betrifft, besteht Gefahr, dass das Nutzfahrzeug nicht mehr kontrolliert gebremst werden kann. Für solche Fälle besteht Bedarf, ein System bereitzustellen, das ein sicheres Verzögern des Fahrzeugs zulässt.

Ein System, das insbesondere auf eine hohe Restverfügbarkeit abzielt, ist beispielsweise aus DE 10 2014 013 756 B3 bekannt. Dort ist eine elektrische Ausrüstung eines Fahrzeugs mit einer wenigstens teilweise elektrischen Brems-und Lenkeinrichtung offenbart, die umfasst: eine elektrische oder elektromechanische Lenkeinrichtung, die mit einem Lenkgetriebe verbunden ist und eine elektronische Lenksteuereinrichtung sowie einen elektrischen Lenksteller umfasst, und eine Betriebsbremseinrichtung. Als Betriebsbremseinrichtung wird in DE 10 2014 013 756 B3 eine elektropneumatische Betriebsbremseinrichtung vorgeschlagen, welche eine elektropneumatische Betriebsbremsventileinrichtung, eine elektronische Bremssteuereinrichtung, elektropneumatische Modulatoren sowie pneumatische Radbremsaktuatoren umfasst, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Die elektropneumatische Betriebsbremsventileinrichtung weist ein Betriebsbremsbetätigungsorgan, sowie ferner innerhalb eines elektrischen Betriebsbremskreises einen elektrischen Kanal mit einem vom Betriebsbremsbetätigungsorgan betätigbaren elektrischen Bremswertgeber auf. Weiterhin ist eine die Betätigungssignale empfangende elektronische Auswerteeinrichtung vorgesehen, welche abhängig von den Betätigungssignalen Bremsanforderungssignale in die elektronische Bremssteuereinrichtung einsteuert, sowie innerhalb wenigstens eines pneumatischen Betriebsbremskreises wenigsten einen pneumatischen Kanal umfasst, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben in Antwort hierauf es erlaubt, pneumatische Bremsdrücke bzw. Bremssteuerdrücke für die pneumatischen Radbremsaktuatoren zu erzeugen. Die elektronische Auswerteeinrichtung der elektropneumatischen Betriebsbremsventileinrichtung umfasst weiterhin elektronische Steuermittel zum Erzeugen einer zweiten Betätigungskraft, unabhängig von einer Fahrerbremsanforderung, welche bei Vorliegen einer vom Fahrerwunsch unabhängigen Bremsanforderung im Bezug zur ersten Betätigungskraft gleichsinnig oder gegensinnig auf den Steuerkolben wirkt. Die elektropneumatische Betriebsbremseinrichtung wird von einer elektrischen Energiequelle versorgt, welche unabhängig von einer zweiten elektrischen Energiequelle ist, welche die elektropneumatische Betriebsbremsventileinrichtung mit elektrischer Energie versorgt. Hierdurch wird sichergestellt, dass wenigstens eines der beiden Systeme möglichst immer funktioniert. Die elektrische oder elektropneumatische Lenkeinrichtung wird dabei von der zweiten elektrischen Energiequelle mit Energie versorgt. Hierdurch soll eine hohe Restverfügbarkeit erreicht werden. Das System ist allerdings komplex und lässt sich so nicht ohne Weiteres in jedem Nutzfahrzeug umsetzen.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird die Restverfügbarkeit erhöht. Ähnliche Systems sind in DE 10 2016 010 462 A1 und in DE 10 2016 010 464 A1 offenbart.

Ferner offenbart DE 10 2016 010 463 A1 ein System und Verfahren, bei welchem Vorsteuerventile über ein Redundanzsignal elektronisch angesteuert werden, falls ein Ausfall oder ein Defekt bei der elektronischen Ansteuerung von Radbremsen des Bremssystems festgestellt wird. Das System versucht dabei, das Blockieren von Rädern zu verhindern.

Aus DE 10 2017 002 716, DE 10 2017 002 718, DE 10 2017 002 719 sowie DE 10 2017 002 721 sind Systeme bekannt, bei denen jeweils pneumatisch eine Redundanz erzeugt wird. Hierbei werden verschiedene ausgesteuerte Bremsdrücke, beispielsweise Vorderachs-, Hinterachs- oder Anhängerbremsdrücke genutzt, um diese ausgefallenen Systemen, wie beispielsweise dem Vorderachsbremskreis, Hinterachsbremskreis, Parkbremskreis oder Anhängerbremskreis, als Redundanzdruck bereitzustellen. Auf diese Weise wird eine untergelagerte pneumatische Redundanzebene erzeugt, sodass ebenfalls eine hohe Restverfügbarkeit erreicht wird.

Darüber hinaus existieren auch Systeme, die den Anhänger mit einbeziehen, wie beispielsweise in DE 10 2016 010 461 A1 offenbart.

EP 2 133 247 A2 zeigt eine elektrisch gesteuerte Parkbremsventilanordnung für ein Bremssystem eines Nutzfahrzeuges, wobei die Parkbremsventilanordnung zwei Anschlüsse aufweist, von denen ein Anschluss dazu vorgesehen ist, eine Anhängersteuerventilanordnung so mit Druck zu beaufschlagen, dass der Anhänger im Parkbremsbetrieb des Nutzfahrzeugs mitbremst, während der andere Anschluss dazu vorgesehen ist, die Anhängersteuerventilanordnung so mit Druck zu beaufschlagen, dass der Anhänger im Parkbremsbetrieb des Nutzfahrzeugs nicht mitbremst. Erfindungsgemäß ist vorgesehen, dass die elektrisch gesteuerte Parkbremsventilanordnung höchstens zwei Magnetventile umfasst, insbesondere ein erstes Magnetventil und ein zweites Magnetventil.

Die vorliegende Erfindung zielt darauf ab, ein System bereitzustellen, welches auch dann noch ein sicheres Stoppen des Fahrzeugs ermöglicht, wenn redundante Systeme, Teilsysteme oder Ebenen des Bremssystems ausgefallen sind. Wird beispielsweise ein Bremssystem über mehrere Stromquellen versorgt, kann es im schlimmsten Fall dazu kommen, dass sämtliche Stromquellen versagen. Auch in diesem Fall soll auf einfache Art und Weise sichergestellt werden, dass das Fahrzeug sicher verzögert werden kann.

Die Erfindung löst dieses Problem durch eine einfache sogenannte Fail-Safe-Erweiterung in dem Parkbremssystem. Genauer gesagt löst die Ausfallsicherheitsventileinheit die Aufgabe in einem ersten Aspekt der Erfindung dadurch, dass das Löseventil bestromt einen Lösedruck an einem ersten Löseventilanschluss für die Parkbremsfunktion bereitstellt und stromlos den ersten Löseventilanschluss mit dem Entlüftungsventil zum Entlüften des ersten Löseventilanschlusses verbindet, wobei das Entlüftungsventil eine nichtlineare Entlüftungscharakteristik aufweist, die ein Entlüften des ersten Löseventilanschlusses von dem Lösedruck auf einen Teilbremsdruck mit einem ersten Gradienten und ein Entlüften des Löseventilanschlusses von dem Teilbremsdruck auf einen Vollbremsdruck mit einem zweiten Gradienten erlaubt, wobei der erste Gradient größer als der zweite Gradient ist.

Die Idee der Erfindung liegt darin, die Parkbremse oder Feststellbremse monostabil anzusteuern. Bei aktivierter Parkbremse wird dazu die Parkbremse mittels des monostabilen Löseventils belüftet und so gelöst, indem das Löseventil bestromt einen Lösedruck bereitstellt. Wird das Löseventil hingegen stromlos geschaltet, beispielsweise aufgrund eines Fehlers in einer übergeordneten Einheit, wird die Parkbremse entlüftet und das Fahrzeug kann gebremst werden. Erfindungsgemäß wird dabei die Parkbremse nicht unmittelbar und sofort entlüftet, sondern über das Entlüftungsventil mit einer nichtlinearen Entlüftungscharakteristik. Die nichtlineare Entlüftungscharakteristik ist so ausgebildet, dass der Löseventilanschluss zunächst von einem Lösedruck auf einen Teilbremsdruck mit einem ersten Gradienten entlüftet wird. Der Lösedruck ist vorzugsweise derjenige Druck, der mindestens erforderlich ist, um die Federspeicherbremsen, die in der Parkbremse vorgesehen sind, vollständig zu lösen. Von diesem Lösedruck auf den Teilbremsdruck soll gemäß der Erfindung schnell entlüftet werden. Der Teilbremsdruck ist vorzugsweise so ausgelegt, dass das Fahrzeug nicht vollständig, sondern nur teilgebremst ist. Es soll also bereits eine Bremsung erzeugt werden, ohne dass Achsen unmittelbar blockieren. Von dem Teilbremsdruck, bei dem eine Teilbremsung ausgeführt wird, bis auf den Vollbremsdruck, bei dem die Federspeicherbremszylinder in entsprechender Weise vollständig entlüftet und somit vollständig zugespannt sind, wird mit einem zweiten Gradienten entlüftet. Der zweite Gradient ist kleiner als der erste Gradient, sodass das Bremsen von dem Teilbremsdruck auf den Vollbremsdruck langsamer erfolgt. Auf diese Weise ist es möglich, eine sichere Verzögerung des Fahrzeugs bereitzustellen und der Gefahr eines unmittelbaren Blockierens von Achsen entgegenzuwirken. Hierbei ist es nicht erforderlich, dass die ersten und zweiten Gradienten konstant sind. Vielmehr können auch die ersten und zweiten Gardienten nichtlineare Entlüftungscharakteristiken definieren. Es ist vielmehr bevorzugt, dass ein durchschnittlicher Gradient beim Entlüften des ersten Löseventilanschlusses von dem Lösedruck auf den Teilbremsdruck größer ist, als ein durchschnittlicher Gradient beim Entlüften des Löseventilanschlusses von dem Teilbremsdruck auf den Vollbremsdruck. Vorzugsweise sind die ersten und zweiten Gradienten konstant. Vorzugsweise entspricht der erste Gradient dem 1 ,2-fachen bis 100-fachen, vorzugsweise dem 1 ,2-fachen bis 20-fachen des zweiten Gradienten.

Es soll verstanden werden, dass das Löseventil nicht zwangsläufig ein einzelnes singuläres Ventil ist, sondern vorzugsweise die Zusammenschaltung von mehreren Ventilen umfasst, wie im Folgen näher beschrieben. Allerdings ist es bevorzugt, dass das Löseventil eine Baueinheit ist.

In einer ersten bevorzugten Ausführungsform weist das Entlüftungsventil mindestens einen Druckbegrenzer und mindestens eine Drossel auf, die parallel zum Druckbegrenzer angeordnet ist und ein Überströmen des Druckbegrenzers erlaubt. Es können auch zwei oder mehr Druckbegrenzer und auch zwei oder mehr Drosseln je Druckbegrenzer vorgesehen sein. Durch Vorsehen des Druckbegrenzers und der Drossel zum Überströmen des Druckbegrenzers ist es möglich, eine nichtlineare Entlüftungscharakteristik auf einfache Art und Weise bereitzustellen. Beispielsweise wird das Entlüften des Löseventilanschlusses von dem Lösedruck auf den Teilbremsdruck vorwiegend über den Druckbegrenzer realisiert, während das Entlüften des Löseventilanschlusses vom Teilbremsdruck auf den Vollbremsdruck vorwiegend über die Drossel realisiert wird.

In einer bevorzugten Weiterbildung weist das Löseventil ein erstes 3/2-Wege-Löseventil mit einem zweiten Löseventilanschluss und einem dritten Löseventilanschluss auf. Für den Fall, dass das Löseventil nur das 3/2-Wege-Löseventil aufweist bzw. als dieses ausgebildet ist, ist auch vorgesehen, dass der erste Löseventilanschluss an dem ersten 3/2-Wege-Löseventil ausgebildet ist. Der zweite Löseventilanschluss ist vorzugsweise zum Empfang von Vorratsdruck mit einem Vorrat verbunden, und der dritte Löseventilanschluss ist vorzugsweise mit dem Entlüftungsventil verbunden. Auf diese Weise kann das 3/2-Wege-Löseventil den ersten Löseventilanschluss wechselweise mit dem zweiten und dritten Löseventilanschluss verbinden, sodass wechselweise an dem ersten Löseventilanschluss der Vorratsdruck bereitgestellt wird und dieser entlüftet wird. Vorzugsweise ist dazu vorgesehen, dass in einer ersten stromlosen Schaltstellung das erste 3/2-Wege-Löseventil den ersten Löseventilanschluss mit dem dritten Löseventilanschluss verbindet und in einer zweiten bestromten Schaltstellung den ersten Löseventilanschluss mit dem zweiten Löseventilanschluss verbindet.

In einer weiteren bevorzugten Ausgestaltung ist vorgesehen, dass das Löseventil neben dem ersten 3/2-Wege-Löseventil auch ein zweites 3/2-Wege-Löseventil aufweist. In diesem Fall ist vorzugsweise vorgesehen, dass das zweite 3/2-Wege-Löseventil den ersten Löseventilanschluss aufweist. Das zweite 3/2-Wege-Löseventil weist darüber hinaus vorzugsweise einen vierten Löseventilanschluss und einen fünften Löseventilanschluss auf. Der vierte Löseventilanschluss ist vorzugsweise mit dem ersten 3/2-Wege-Löseventil verbunden, genauer gesagt in diesem Fall mit einem sechsten Löseventilanschluss, und der fünfte Löseventilanschluss ist in diesem Fall vorzugsweise mit dem Entlüftungsventil verbunden. Nach wie vor ist vorzugsweise der zweite Löseventilanschluss, der an dem ersten 3/2-Wege-Löseventil ausgebildet ist, mit dem Vorrat verbunden, und der dritte Löseventilanschluss, der ebenfalls an dem ersten 3/2-Wege-Löseventil ausgebildet ist, ist nach wie vor mit dem Entlüftungsventil verbunden. In dieser Ausführungsform sind demnach vorzugsweise sowohl der dritte Löseventilanschluss als auch der fünfte Löseventilanschluss mit dem Entlüftungsventil verbunden, beispielsweise über ein T-Stück oder direkt. In dieser Ausführungsform ist also eine Teilkaskadierung der ersten und zweiten 3/2-Wege-Löseventile vorgesehen. Die ersten und zweiten 3/2-Wege-Löseventile des Löseventils sind vorzugsweise so verschaltet, dass sowohl das erste 3/2-Wege-Löseventil als auch das zweite 3/2-Wege-Löseventil bestromt sein müssen, um den Lösedruck auszusteuern. Sobald entweder das erste 3/2-Wege-Löseventil oder das zweite 3/2-Wege-Löseventil oder beide 3/2-Wege-Löseventile stromlos sind, wird vorzugsweise der erste Löseventilanschluss entlüftet, und zwar mittels des Entlüftungsventils, das die nichtlineare Entlüftungscharakteristik aufweist. Auf diese Weise kann die Sicherheit weiter verbessert werden. Ein Einfachfehler kann so direkt zu einer Entlüftung führen und es ist nicht erforderlich, dass unmittelbar ein Doppelfehler vorliegt. Beispielsweise kann vorgesehen sein, dass die ersten und zweiten 3/2-Wege-Löseventile von separaten elektronischen Steuereinheiten angesteuert werden, sodass bereits ein Ausfall in einer dieser Steuereinheiten zum kontrollierten Verzögern des Fahrzeugs führt.

In einer weiteren bevorzugten Ausführungsform der Ausfallsicherheitsventileinheit ist ferner ein Wechselventil vorgesehen, das mit dem ersten Löseventilanschluss zum Einsteuern des Lösedrucks in die Parkbremsfunktion verbunden ist. Das Wechselventil ist vorzugsweise als sogenanntes Select-High-Ventil ausgebildet und weist einen ersten Wechselventilanschluss, einen zweiten Wechselventilanschluss und einen dritten Wechselventilanschluss auf. Der erste Wechselventilanschluss ist vorzugsweise mit dem ersten Löseventilanschluss verbunden und empfängt von diesem den Lösedruck, wenn dieser ausgesteuert wird. Der zweite Wechselventilanschluss ist vorzugsweise mit einer elektropneumatischen Parkbremsventilanordnung verbunden und empfängt entweder einen Parkbremssteuerdruck, der von einer Vorsteuerventileinheit bereitgestellt wird, oder einen Federspeicherbremsdruck, der von einer Hauptventileinheit der Parkbremsventilanordnung bereitgestellt wird. Das Wechselventil steuert dann den höheren der beiden Drücke, die an dem ersten bzw. zweiten Wechselventilanschluss anliegen, also den Lösedruck und entweder den Parkbremssteuerdruck oder den Federspeicherbremsdruck an dem dritten Wechselventilanschluss aus. Der dritte Wechselventilanschluss ist dann entweder direkt mit einem Federspeicheranschluss verbunden, an dem ein oder mehrere Federspeicherbremszylinder angeschlossen werden können, oder mit einer Hauptventileinheit der Parkbremsventilanordnung, um so den Lösedruck oder den in diesem Fall Parkbremssteuerdruck am dritten Wechselventilanschluss auszusteuern und entsprechend an der Hauptventileinheit bereitzustellen, sodass diese dann wiederum aus dem empfangenen Lösedruck oder Parkbremssteuerdruck den Federspeicherbremsdruck erzeugen kann.

Auf diese Weise kann sichergestellt werden, dass die Federspeicherbremszylinder entlüftet bleiben, wenn entweder ein ausreichender Lösedruck bereitgestellt wird über das Löseventil oder andererseits über Ventile der Parkbremsfunktion ein Lösen von Feststellbremsen angefordert wird.

In einem zweiten Aspekt der Erfindung wird die eingangs genannte Aufgabe gelöst durch eine Parkbremsventilanordnung für ein elektronisch steuerbares pneumatisches Bremssystem für ein Nutzfahrzeug mit einem Federspeicheranschluss zum Anschließen wenigstens eines Federspeicherbremszylinders, einem Vorratsanschluss zum Empfangen von Vorratsdruck, einer Hauptventileinheit, die den Vorratsdruck empfängt und dazu ausgebildet ist, einen Federspeicherbremsdruck an dem Federspeicheranschluss in Abhängigkeit von einem Parkbremssteuerdruck auszusteuern, einer Vorsteuerventileinheit zum Bereitstellen des Parkbremssteuerdrucks und einer Ausfallsicherheitsventileinheit nach einer der vorstehend beschriebenen bevorzugten Ausführungsformen einer Ausfallsicherheitsventileinheit gemäß dem ersten Aspekt der Erfindung, welche den Lösedruck an der Hauptventileinheit aussteuert, wobei die Hauptventileinheit ferner dazu ausgebildet ist, den Federspeicherbremsdruck in Abhängigkeit von dem Lösedruck auszusteuern. Sowohl der Parkbremssteuerdruck als auch der Lösedruck werden an der Hauptventileinheit der Parkbremsventilanordnung bereitgestellt.

Die Parkbremsventilanordnung kann gemäß einer üblichen Parkbremsventilanordnung, auch als Feststellbremsmodul, EPH oder dergleichen bezeichnet, ausgebildet sein. Der Lösedruck kann in dieser Ausführungsform an einen herkömmlichen Anti-Compound-Anschluss der Parkbremsventilanordnung ausgesteuert werden. Insofern ist es auch bevorzugt, dass die Vorsteuerventileinheit und die Hauptventileinheit in ein gemeinsames Gehäuse integriert sind. Der Parkbremssteuerdruck, der von der Vorsteuerventileinheit bereitgestellt wird, wird vorzugsweise in Antwort auf ein Parkbremssignal ausgesteuert, das beispielsweise durch einen Parkbremsschalter in einer Kabine des Fahrzeugs ausgelöst wird. Auch kann der Parkbremssteuerdruck basierend auf einem Parkbremsanforderungssignal eines Zentralmoduls eines Bremssystems ausgesteuert werden.

Um sowohl den Parkbremssteuerdruck als auch den Lösedruck an der Hauptventileinheit bereitzustellen, weist die Parkbremsventilanordnung gemäß dem zweiten Aspekt der Erfindung vorzugsweise ein Wechselventil auf, das mit dem ersten Löseventilanschluss zum Empfang des Lösedrucks, mit der Vorsteuerventileinheit zum Empfangen des Parkbremssteuerdrucks und mit der Hauptventileinheit zum Aussteuern des jeweils höheren des Lösedrucks und des Parkbremssteuerdrucks an dieser verbunden ist. Das Wechselventil dementsprechend vorzugsweise als Select-High-Ventil ausgebildet.

Vorzugsweise weist die Hauptventileinheit ein Relaisventil auf, mit einem mit dem Vorratsanschluss verbundenen Relaisventil-Vorratsanschluss, einem mit dem Federspeicheranschluss verbundenen Relaisventil-Arbeitsanschluss, einem mit einer Entlüftung verbundenen Relaisventil-Entlüftungsanschluss und einem den Parkbremssteuerdruck bzw. den Lösedruck empfangenden Relaisventil-Steueranschluss. Der Relaisventil-Steueranschluss ist vorzugsweise mit dem Wechselventil verbunden, wenn ein solches vorgesehen ist. Alternativ kann der Relaisventil-Steueranschluss auch direkt mit dem Löseventilanschluss und der Vorsteuerventileinheit verbunden sein, beispielsweise über ein T-Stück.

Weiterhin ist bevorzugt, dass die Vorsteuerventileinheit ein Bistabilventil aufweist, welches einen den Vorratsdruck empfangenden ersten Bistabilventilanschluss, einen den Parkbremssteuerdruck aussteuernden zweiten Bistabilventilanschluss und einen mit einer oder der Entlüftung verbundenen dritten Bistabilventilanschluss aufweist. Ein Bistabilventil ist ein Schaltventil, welches zwei stabile Schaltzustände hat. Vorzugsweise ist in einer ersten stabilen Schaltstellung der erste Bistabilventilanschluss mit dem zweiten Bistabilventilanschluss druckleitend verbunden, während in einer zweiten stabilen Schaltstellung der dritte Bistabilventilanschluss mit dem zweiten Bistabilventilanschluss verbunden ist.

Weiterhin ist bevorzugt, dass die Vorsteuerventileinheit ein 2/2-Wege-Schaltventil zum gestuften Entlüften und/oder Halten des Parkbremssteuerdrucks aufweist. Das 2/2-Wege-Schaltventil ist vorzugsweise stromlos offen und kann bestromt geschlossen werden. Hierdurch lässt sich beispielsweise der ausgesteuerte Parkbremssteuerdruck einsperren, sodass unabhängig von der Schaltstellung des Bistabilventils der Parkbremssteuerdruck an der Hauptventileinheit bzw. dem Wechselventil aufrechterhalten bleibt. Auch kann hierüber ein gestuftes Be- und/oder Entlüften erfolgen, da ein 2/2-Wege-Schaltventil rascher und einfacher schaltbar ist als ein Bistabilventil.

Weiterhin ist bevorzugt, dass die Vorsteuerventileinheit, die Hauptventileinheit und eine elektronische Steuereinheit zum Bereitstellen von Schaltsignalen an der Vorsteuereinheit gemeinsam in ein Parkbremsmodul integriert sind. Die elektronische Steuereinheit ist für die Parkbremsventilanordnung vorgesehen und steuert wenigstens die Vorsteuerventileinheit. Es kann zusätzlich vorgesehen sein, dass die elektronische Steuereinheit auch die Ausfallsicherheitsventileinheit, insbesondere das Löseventil, steuert. In diesem Fall kann zusätzlich vorgesehen sein, dass die Ausfallsicherheitsventileinheit an dem Parkbremsmodul befestigt ist oder in dieses integriert ist.

Wird als Parkbremsventileinheit bzw. Parkbremsmodul ein herkömmliches Parkbremsmodul verwendet, wie bereits im Stand der Technik bekannt, ist es bevorzugt, dass der Löseventilanschluss mit einem Lösedruckanschluss, auch als Anti-Compound-Anschluss bekannt, des Parkbremsmoduls verbunden ist und an diesem den Lösedruck bereitstellt. Auf diese Weise lässt sich ein herkömmliches Parkbremsmodul verwenden.

In einem dritten Aspekt wird die eingangs genannte Aufgabe gelöst durch ein Fahrzeug, insbesondere Nutzfahrzeug, mit einem elektronisch steuerbaren pneumatischen Bremssystem und einer Parkbremsventilanordnung nach einem der vorstehend beschriebenen bevorzugten Ausführungsformen einer Parkbremsventilanordnung gemäß dem zweiten Aspekt der Erfindung. Es soll verstanden werden, dass die Ausfallsicherheitsventileinheit gemäß dem ersten Aspekt der Erfindung, die Parkbremsventilanordnung gemäß dem zweiten Aspekt der Erfindung sowie das Fahrzeug gemäß dem dritten Aspekt der Erfindung gleiche oder ähnliche Unteraspekte aufweisen, wie sie insbesondere in den abhängigen Ansprüchen niedergelegt sind. Insofern wird für diese Aspekte vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine schematische Ansicht einer Ausfallsicherheitsventileinheit mit daran angeschlossenen Peripheriegeräten;
- Figur 2: einen Druckverlauf der Entlüftungscharakteristik;
- Figur 3: eine schematische Darstellung der Ausfallsicherheitsventileinheit in einem zweiten Ausführungsbeispiel;
- Figur 4: eine Parkbremsventilanordnung gemäß einem ersten Ausführungsbeispiel;
- Figur 5: eine Parkbremsventilanordnung gemäß einem zweiten Ausführungsbeispiel; und
- Figur 6: ein Fahrzeug.

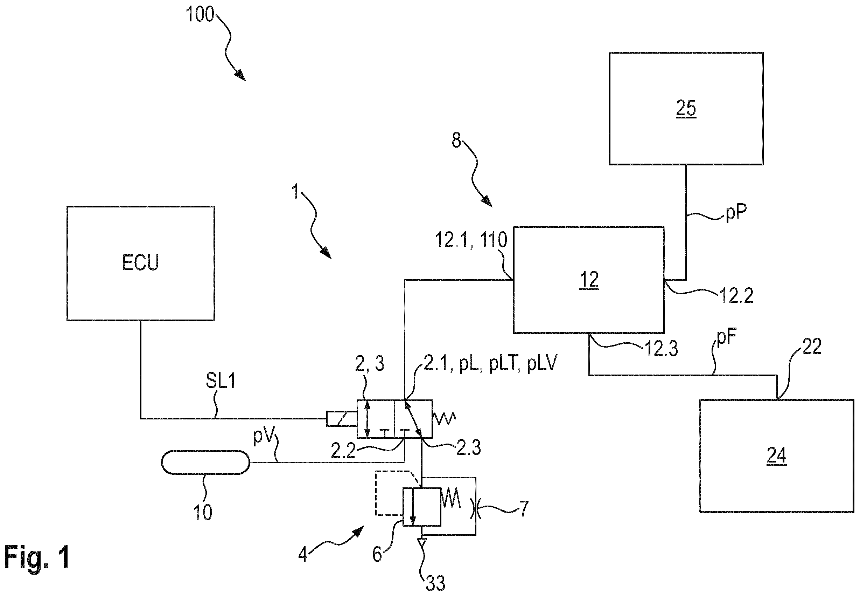

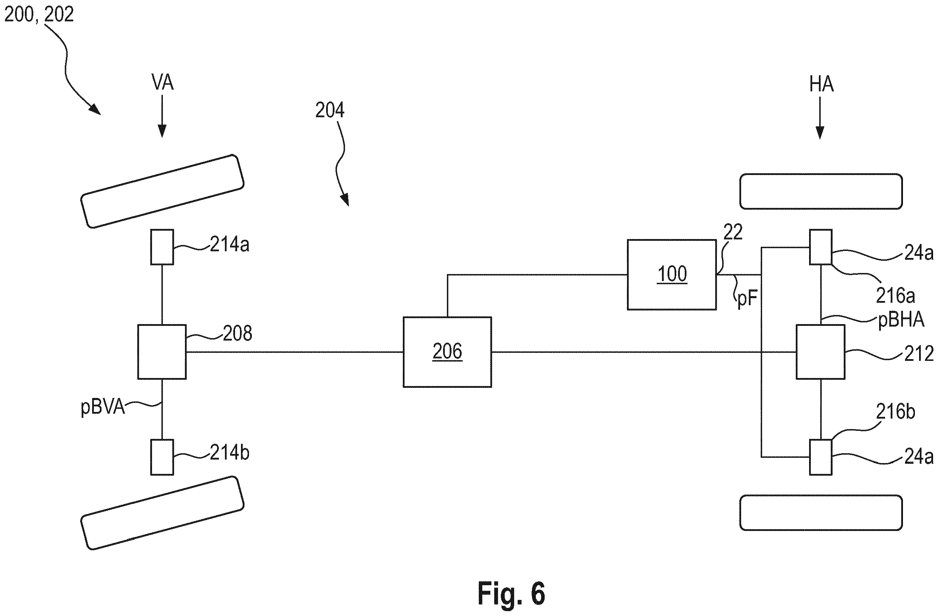

Eine Ausfallsicherheitsventileinheit 1 für eine Parkbremsfunktion 8 eines elektronisch steuerbaren pneumatischen Bremssystems 204 (vgl. Figur 6) für ein Nutzfahrzeug 202 weist ein monostabiles Löseventil 2 und ein Entlüftungsventil 4 auf. Das Löseventil 2 ist in dem in Figur 1 gezeigten Ausführungsbeispiel als ein erstes 3/2-Wege-Löseventil 3 ausgebildet, auch wenn andere Ventilformen bevorzugt und möglich sind. Darüber hinaus kann das Löseventil 2 auch weitere Löseventile umfassen, wie sich aus den weiteren Ausführungsbeispielen ergeben wird.

Das Löseventil 2, im ersten Ausführungsbeispiel genauer gesagt das erste 3/2-Wege-Löseventil 3, weist einen ersten Löseventilanschluss 2.1 auf, der mit der Parkbremsfunktion 8 verbunden ist. Ferner weist das erste 3/2-Wege-Löseventil 3 einen zweiten Löseventilanschluss 2.2 auf, der mit einem Vorrat 10 verbunden ist und von diesem Vorratsdruck pV empfängt. Ein dritter Löseventilanschluss 2.3 des 3/2-Wege-Löseventils 3 ist mit dem Entlüftungsventil 4 verbunden. Das Entlüftungsventil 4 ist in dem in Figur 1 gezeigten Ausführungsbeispiel aus einem Druckbegrenzer 6 mit einer parallel dazu angeordneten Drossel 7 gebildet, die ein Überströmen des Druckbegrenzers 6 erlaubt. Der Druckbegrenzer 6 selbst ist dann wiederum mit einer Entlüftung 33 verbunden. Das Löseventil 2 ist so ausgelegt, dass es stromlos in der in Figur 1 gezeigten ersten Schaltstellung ist, in der der erste Löseventilanschluss 2.1 mit dem dritten Löseventilanschluss 2.3 verbunden ist, sodass der erste Löseventilanschluss 2.1 mit dem Entlüftungsventil 4 verbunden und entlüftet ist. Das Löseventil 2 wird in dem in Figur 1 gezeigten Ausführungsbeispiel von einer elektronischen Steuereinheit ECU gesteuert, die irgendeine elektronische Steuereinheit des elektronisch steuerbaren pneumatischen Bremssystems 204 sein kann, wie beispielsweise die elektronische Steuereinheit eines Zentralmoduls, eines Achsmodulators, eines Parkbremsmoduls, einer Lenkeinheit oder dergleichen. Die elektronische Steuereinheit ECU stellt ein erstes Lösesignal SL1 an dem Löseventil 2 bereit, um dieses von der ersten in Figur 1 gezeigten Schaltstellung in die zweite in Figur 1 nicht gezeigte Schaltstellung zu verbringen. In der zweiten in Figur 1 nicht gezeigten Schaltstellung ist der erste Löseventilanschluss 2.1 mit dem zweiten Löseventilanschluss 2.2 verbunden, sodass der Vorratsdruck pV durchgesteuert und an dem ersten Löseventilanschluss 2.1 ein Lösedruck pL ausgesteuert wird. Der Lösedruck pL wird dann an der Parkbremsfunktion 8 bereitgestellt, die den Lösedruck pL je nach Ausführungsform als Steuerdruck oder als Volumendruck verwenden kann, um Federspeicherbremszylinder 24 zu belüften und so zu lösen.

In dem in Figur 1 gezeigten Ausführungsbeispiel ist der erste Löseventilanschluss 2.1 mit einem Wechselventil 12 verbunden, über das das Löseventil 2 den Lösedruck pL in die Parkbremsfunktion 8 einsteuern kann. Es sind auch Ausführungsformen bevorzugt, in denen das Löseventil 2 über den ersten Löseventilanschluss 2.1 mit einem Lösedruckanschluss 110, auch als Anti-Compound-Anschluss bezeichnet, der Parkbremsfunktion 8 verbunden ist. Solche Ausführungsformen werden später noch im Detail beschrieben. Sie haben den Vorteil, dass herkömmliche Parkbremsmodule mit einem derartigen Lösedruckanschluss verwendet werden können, um diese auf einfache Art und Weise durch die Ausfallsicherheitsventileinheit wie hierin beschrieben um eine Sicherheitsfunktion zu ergänzen.

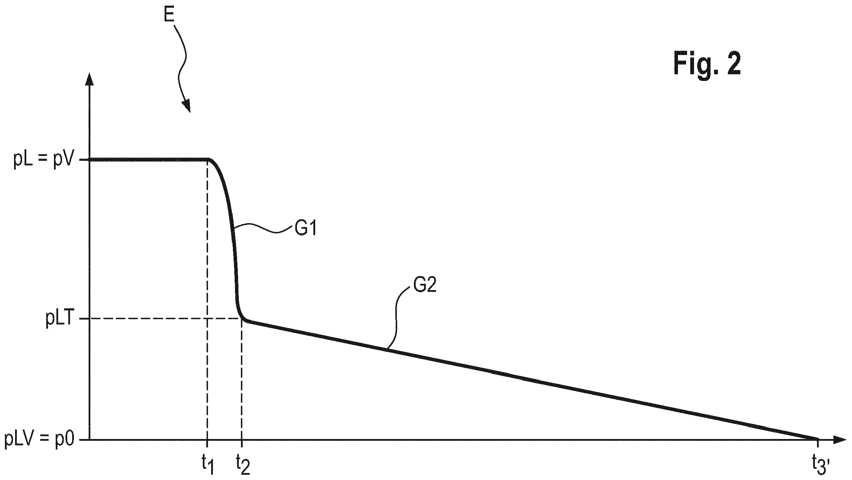

Die Kombination in dem Entlüftungsventil 4 mit Druckbegrenzer 6 und Drossel 7 erlaubt es, auf einfache Art und Weise eine nichtlineare Entlüftungscharakteristik E umzusetzen, wie in Figur 2 illustriert. Für den Fall, dass in dem Bremssystem 204 ein Fehler auftritt und infolgedessen die elektronische Steuereinheit ECU das erste Lösesignal SL1 nicht bereitstellt, fällt das Löseventil 2 in den in Figur 1 gezeigten ersten Schaltzustand zurück, in dem der erste Löseventilanschluss 2.1 mit dem dritten Löseventilanschluss 2.3 verbunden ist, sodass der erste Löseventilanschluss 2.1 mit dem Entlüftungsventil 4 verbunden ist. Der zu diesem Zeitpunkt an dem ersten Löseventilanschluss 2.1 ausgesteuerte Lösedruck pL wird folglich entlüftet. Der Druckbegrenzer 6 lässt dann zunächst eine Entlüftung auf einen Teilbremsdruck pLT mit einem ersten Gradienten G1 zu (vgl. Figur 2), und, sobald der Grenzdruck, in diesem Fall der Teilbremsdruck pLT, erreicht ist, wird eine restliche Entlüftung des ersten Löseventilanschlusses 2.1 bis auf einen Vollbremsdruck pLV, der vorzugsweise dem Umgebungsdruck entsprechen kann, über die Drossel 7 realisiert, wobei dies mit einem zweiten Gradienten G2 erfolgt.

Wie sich insbesondere aus Figur 2 entnehmen lässt, ist der erst Gradient G1 deutlich größer als der zweite Gradient G2. Zu einem Zeitpunkt t1, an dem das erste Lösesignal SL1 wegfällt und infolgedessen das Löseventil 2 in die erste in Figur 1 gezeigte Schaltstellung schaltet, wird der erste Löseventilanschluss 2.1 mit dem ersten Gradienten G1 entlüftet, wobei der Druck von dem Lösedruck pL, der dem Vorratsdruck pV entsprechen kann, auf den Teilbremsdruck pLT abfällt. Ist dieser erreicht (Zeitpunkt t2), fällt der Druck von dem Teilbremsdruck pLT auf den Vollbremsdruck pLV mit dem zweiten Gradienten G2 ab. Erst zum Zeitpunkt t3 ist dann der Vollbremsdruck pLV erreicht. Wie sich leicht aus Figur 2 entnehmen lässt, ist der Abstand zwischen dem zweiten Zeitpunkt t2 und dem dritten Zeitpunkt t3 deutlich größer als der Abstand zwischen dem ersten Zeitpunkt t1 und dem zweiten Zeitpunkt t2, nämlich in etwa 15,5-mal so lang. Wie sich ebenfalls aus Figur 2 ergibt, ist der erste Gradient G1 in etwa 20-mal so groß wie der zweite Gradient G2, wobei der erste Gradient G1 ebenfalls nichtlinear und der zweite Gradient G2 im Wesentlichen linear ist. Der erste Gradient G1 ist vielmehr nach einer Exponentialfunktion gebildet, wobei der durchschnittliche Wert des ersten Gradienten G1 in dem in Figur 2 gezeigten Beispiel in etwa 4,2 beträgt. Auch andere Größen und Verhältnisse sind bevorzugt, wie beispielsweise ein Faktor von 10 oder größer. Wichtig ist, dass von dem Lösedruck pL auf den Teilbremsdruck pLT rasch entlüftet wird, um schnell eine Teilbremsung und somit eine Teilverzögerung des Fahrzeugs zu erreichen, dann aber von dem Teilbremsdruck pLT auf den Vollbremsdruck pLV langsam entlüftet wird, um ein Blockieren von Achsen und ein unkontrolliertes Verzögern des Fahrzeugs zu verhindern.

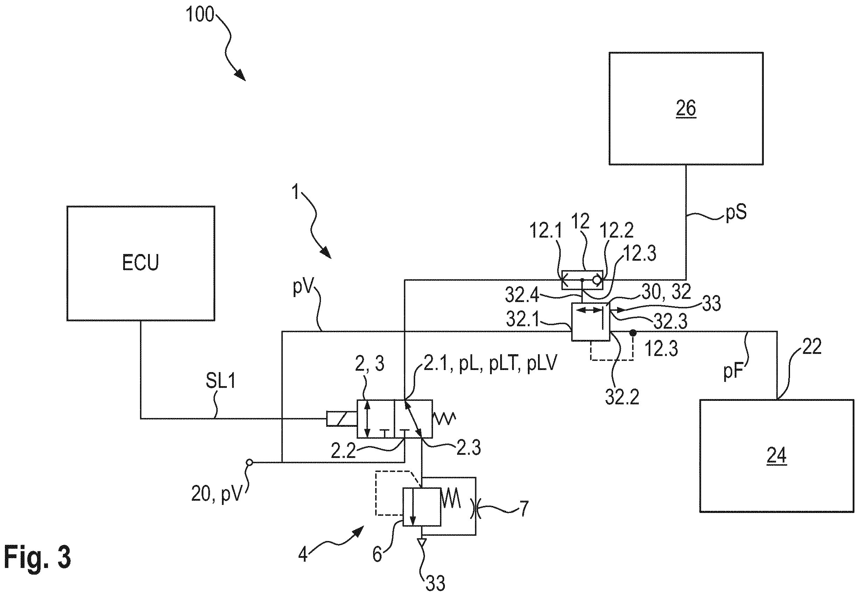

Das in Figur 3 gezeigte zweite Ausführungsbeispiel einer Ausfallsicherheitsventileinheit 1 basiert im Wesentlichen auf dem in Figur 1 gezeigten ersten Ausführungsbeispiel und insofern wird vollumfänglich auf die obige Beschreibung Bezug genommen. Im Folgenden werden insbesondere die Unterschiede betont. Gleiche und ähnliche Elemente sind mit denselben Bezugszeichen versehen.

Während in dem ersten Ausführungsbeispiel (Figur 1) an das Wechselventil 12 eine Parkbremseinheit 25 angeschlossen ist, die einen Parkbremsdruck pP bereitstellt, der unmittelbar als Volumendruck verwendet werden kann und ebenso der Lösedruck pL als Volumendruck ausgebildet ist und das Wechselventil 12 den jeweils höheren des Lösedrucks pL und des Parkbremsdrucks pP als Federspeicherbremsdruck pF an den Federspeicherbremszylindern 24 aussteuert, verwendet das in Figur 3 gezeigte zweite Ausführungsbeispiel zunächst einen Parkbremssteuerdruck pS, als Eingangsdruck für das Wechselventil 12. In übereinstimmender Weise ist auch der Lösedruck pL in dem in Figur 3 gezeigten Ausführungsbeispiel als Steuerdruck ausgebildet. Der Parkbremssteuerdruck pS wird in dem in Figur 3 gezeigten zweiten Ausführungsbeispiel von einem Handbremsventil 26 bereitgestellt, wie dies beispielsweise bei USamerikanischen Fahrzeugen der Fall ist. Ein solches Handbremsventil kann beispielsweise in der Kabine des Fahrzeugs angeordnet sein und durch Betätigung von dem Fahrer aktiviert werden.

Das Wechselventil 12 ist in dem in Figur 3 gezeigten Ausführungsbeispiel wiederum als Select-High-Ventil ausgebildet und weist einen ersten Wechselventilanschluss 12.1, einen zweiten Wechselventilanschluss 12.2 und einen dritten Wechselventilanschluss 12.3 auf. Der erste Wechselventilanschluss 12.1 ist mit dem ersten Löseventilanschluss 12.1 verbunden und empfängt den Lösedruck pL. Der zweite Wechselventilanschluss 12.2 ist mit dem Handbremsventil 26 verbunden und empfängt den Parkbremssteuerdruck pS. Der dritte Wechselventilanschluss 12.3 ist in dem in Figur 3 gezeigten Ausführungsbeispiel mit einem Relaisventil 32 verbunden, das zur Volumenverstärkung des Parkbremssteuerdrucks pS bzw. Lösedrucks pL verwendet wird.

Das Relaisventil 32 weist einen Relaisventil-Vorratsanschluss 32.1 auf, der mit dem Vorratsanschluss 20 verbunden ist und Vorratsdruck pV empfängt. Der Vorratsanschluss 20 kann wiederum mit dem Vorrat 10 verbunden sein, wie dies bereits mit Bezug auf Figur 1 beschrieben wurde. Darüber hinaus weist das Relaisventil 32 einen Relaisventil-Arbeitsanschluss 32.2 auf, an dem der volumenverstärkte Druck als Federspeicherbremsdruck pF ausgesteuert wird. Der Relaisventil-Arbeitsanschluss 32.2 ist dann mit einem Federspeicheranschluss 22 verbunden, an den ein oder mehrere Federspeicherbremszylinder 24 angeschlossen sein können. Das Relaisventil 32 weist ferner einen Relaisventil-Entlüftungsanschluss 32.3 zum Entlüften des Federspeicheranschlusses 22 sowie einen Relaisventil-Steueranschluss 32.4 auf, der mit dem dritten Wechselventilanschluss 12.3 verbunden ist und den vom Wechselventil 12 ausgesteuerten Druck, also den jeweils höheren des Lösedrucks pL und des Parkbremssteuerdrucks pS empfängt.

Das Löseventil 2 und das Entlüftungsventil 4 sind wie in Figur 1 ausgebildet, sodass für diese auf die obige Beschreibung Bezug genommen wird.

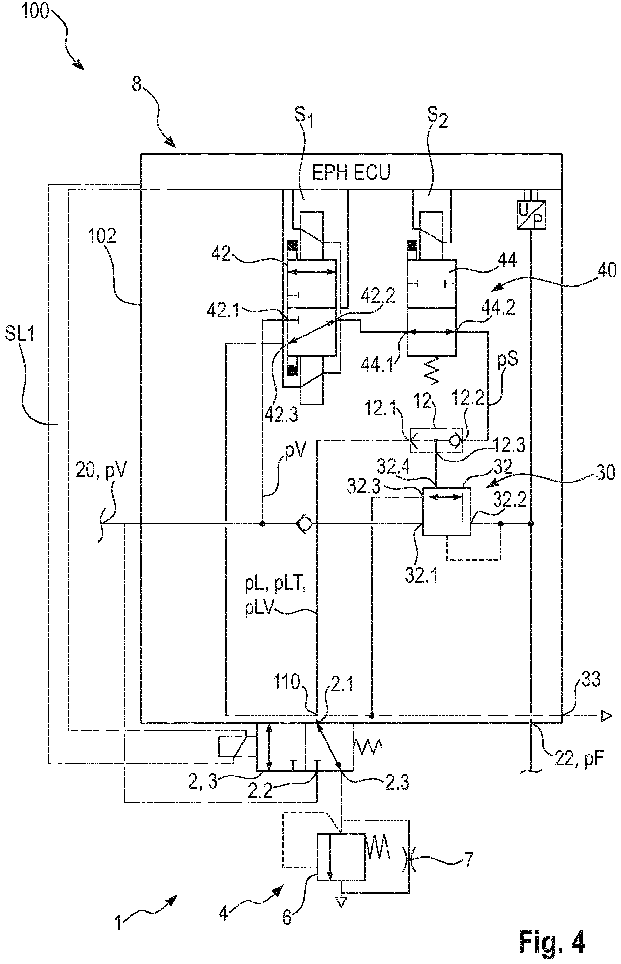

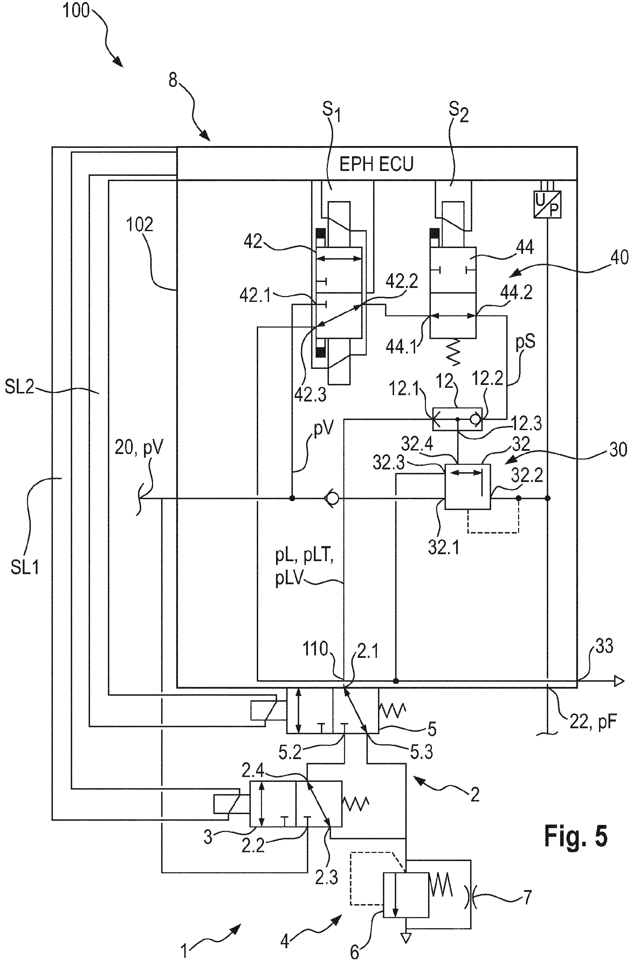

Die Ausführungsbeispiele der Figuren 4 und 5 zeigen nun jeweils eine Parkbremsventilanordnung 100, die aus einem Parkbremsmodul 102 und einer Ausfallsicherheitsventileinheit 1 gebildet ist.

Damit stellen diese beiden Ausführungsbeispiele (Figuren 4 und 5) integrierte Anordnungen dar. In beiden Ausführungsbeispielen ist jeweils das Löseventil 2 direkt an das Parkbremsmodul 102 angeflanscht, es soll aber verstanden werden, dass das Löseventil 2 auch in das Parkbremsmodul 102 integriert sein kann, wodurch Vorteile in der Montage erreicht werden können.

Das Parkbremsmodul 102 ist im Wesentlichen wie aus dem Stand der Technik bekannt aufgebaut. Es umfasst einen Vorratsanschluss 20, der mit einem Druckluftvorrat, beispielsweise dem Vorrat 10, verbunden ist und Vorratsdruck pV empfängt. Darüber hinaus weist es einen Federspeicheranschluss 22 auf, zum Anschließen von wenigstens einem Federspeicherbremszylinder 24, an dem der Federspeicherbremsdruck pF bereitgestellt wird. Ferner weist das Parkbremsmodul 102 einen Entlüftungsanschluss 33 auf, der mit einer Entlüftung verbunden sein kann.

Im Inneren des Parkbremsmoduls 102, das zum Umsetzen der Parkbremsfunktion 8 vorgesehen ist, ist eine Hauptventileinheit 30 sowie eine Vorsteuerventileinheit 40 vorgesehen. Die Hauptventileinheit 30 weist hier das bereits beschriebene Relaisventil 32 auf. Die Vorsteuerventileinheit 40 weist in dem hier gezeigten Ausführungsbeispiel ein Bistabilventil 42 sowie ein 2/2-Wege-Schaltventil 44 auf, das als Halteventil dient. Die Vorsteuerventileinheit 40 kann aber auch auf andere Art und Weise ausgebildet sein, beispielsweise durch zwei oder drei 3/2-Wegeventile oder 2/2-Wegeventile, die auch monostabil ausgebildet sein können.

Das Bistabilventil 42 ist als 3/2-Wegeventil ausgebildet und weist einen ersten Bistabilventilanschluss 42.1 auf, der mit dem Vorratsanschluss 20 verbunden ist und Vorratsdruck pV empfängt. Ferner weist es einen zweiten Bistabilventilanschluss 42.2 auf, der mit dem 2/2-Wege-Schaltventil verbunden ist, genauer gesagt mit einem ersten Schaltventilanschluss 44.1. Ein dritter Bistabilventilanschluss 42.3 ist mit dem Entlüftungsanschluss 33 verbunden. Das Bistabilventil 42 hat zwei stabile Schaltstellungen und lässt sich mittels eines ersten Schaltsignals S1, das von einer in das Parkbremsmodul 102 integrierten elektronischen Steuereinheit ECU bereitgestellt wird, zwischen diesen schalten. In der in Figur 4 gezeigten ersten Schaltstellung ist der dritte Bistabilventilanschluss 42.3 mit dem zweiten Bistabilventilanschluss 42.2 verbunden, sodass dieser mit der Entlüftung verbunden ist. In der zweiten in Figur 4 nicht gezeigten Schaltstellung ist hingegen der erste Bistabilventilanschluss 42.1 mit dem zweiten Bistabilventilanschluss 42.2 verbunden, sodass der Vorratsdruck pV durchgesteuert wird.

Das 2/2-Wege-Schaltventil 44 weist neben dem ersten Schaltventilanschluss 44.1 einen zweiten Schaltventilanschluss 44.2 auf, der mit der Hauptventileinheit 30 verbunden ist, um an dieser den Parkbremssteuerdruck pS bereitzustellen. In dem in Figur 4 gezeigten Ausführungsbeispiel ist der zweite Schaltventilanschluss 44.2 mit dem Wechselventil 12 verbunden, im Detail mit dem zweiten Wechselventilanschluss 12.2, wie dies bereits im Grunde schon in Bezug auf die Figuren 1 und 3 beschrieben wurde. Das 2/2-Wege-Schaltventil 44 ist monostabil und stromlos in einer offenen in Figur 4 gezeigten ersten Schaltstellung, in der der erste Schaltventilanschluss 44.1 mit dem zweiten Schaltventilanschluss 44.2 verbunden ist. In der zweiten in Figur 4 nicht gezeigten Schaltstellung ist das 2/2-Wege-Schaltventil 44 geschlossen. Um das 2/2-Wege-Schaltventil 44 zu schalten, wird von der elektronischen Steuereinheit ECU ein zweites Schaltsignal S2 bereitgestellt. Das 2/2-Wege-Schaltventil 44 dient insbesondere dazu, einen mittels des Bistabilventils 42 ausgesteuerten Druck, der dann über das 2/2-Wege-Schaltventil 44 als Parkbremssteuerdruck pS bereitgestellt wird, zwischen diesem und dem Wechselventil 12 einzusperren. Das 2/2-Wege-Schaltventil 44 kann auch dazu verwendet werden, die Hauptventileinheit 30 gestuft zu entlüften, um so über diese ein gestuftes Entlüften des Federspeicheranschlusses 22 zu erreichen, beispielsweise dann, wenn die Federspeicherbremszylinder 24, die an den Federspeicheranschluss 22 angeschlossen sind, zum Zusatz- oder Hilfsbremsen genutzt werden sollen.

Die Ausfallsicherheitsventileinheit 1 ist in dem in Figur 4 gezeigten Ausführungsbeispiel an einen Lösedruckanschluss 110 des Parkbremsmoduls 102 angeschlossen. Ein Lösedruckanschluss 110 ist auch als Anti-Compound-Anschluss bekannt und lässt ein manuelles Aussteuern eines Steuerdrucks über den Lösedruckanschluss 110 an der Hauptventileinheit 30 zu. Zu diesem Zweck ist der Lösedruckanschluss 110 mit dem ersten Wechselventilanschluss 12.1 des Wechselventils 12 verbunden. Das Wechselventil 12 ist so ausgelegt, dass jeweils der höhere des Parkbremssteuerdrucks pS und des über den Lösedruckanschluss 110 bereitgestellten Drucks an dem dritten Wechselventilanschluss 12.3 ausgesteuert und damit an der Hauptventileinheit 30, insbesondere an dem Relaisventil-Steueranschluss 32.4 bereitgestellt wird.

Allerdings ist es nicht zwingend erforderlich, dass die Ausfallsicherheitsventileinheit an einem solchen Lösedruckanschluss 110 angeschlossen ist, vielmehr kann der erste Löseventilanschluss 2.1 auch direkt mit dem Wechselventil 12 verbunden sein, entweder unmittelbar oder über eine entsprechende Druckleitung.

Das Löseventil 2 wird in dem in Figur 4 gezeigten Ausführungsbeispiel elektrisch auch von der elektronischen Steuereinheit ECU des Parkbremsmoduls 102 gesteuert, welches das erste Lösesignal SL1 bereitstellt. Dieses wird vorzugsweise stets dann bereitgestellt, wenn das Fahrzeug im Betrieb ist. Üblicherweise läuft der Betrieb dann wie folgt ab: Wird das Nutzfahrzeug 202 gestartet, wird zunächst das Bistabilventil 42 von der ersten in Figur 4 gezeigten Schaltstellung in die zweite in Figur 4 nicht gezeigte Schaltstellung verbracht, sodass der Vorratsdruck pV an dem 2/2-Wege-Schaltventil 44 ausgesteuert und von diesem als Parkbremssteuerdruck pS an der Hauptventileinheit 30 bereitgestellt wird. Infolgedessen wird der Federspeicherbremsdruck pF mittels der Hauptventileinheit 30 an dem Federspeicheranschluss 22 ausgesteuert, die an den Federspeicheranschluss 22 angeschlossenen Federspeicherbremszylinder 24 werden belüftet und damit gelöst. Anschließend kann durch Bestromen des 2/2-Wege-Schaltventils 44 der Parkbremssteuerdruck pS eingeschlossen werden und das Bistabilventil 42 kann entweder in der zweiten Schaltposition verbleiben oder in die erste Schaltposition zurückgeschaltet werden.

Gleichzeitig wird vorzugsweise das erste Lösesignal SL1 bereitgestellt, sodass das Löseventil, in Figur 4 das erste 3/2-Wege-Löseventil 3, in die zweite in Figur 3 ebenfalls nicht gezeigte Schaltstellung verbracht wird, in der der zweite Löseventilanschluss 2.2 mit dem Vorratsanschluss 20 verbunden ist und so über das Löseventil 2 Vorratsdruck pV an dem Lösedruckanschluss 110 bereitgestellt und über diesen an dem ersten Wechselventilanschluss 12.1 ausgesteuert wird. Der Lösedruck pL und der Parkbremssteuerdruck pS sollen im Allgemeinen in etwa gleich groß sein. Für den Fall, dass der Parkbremssteuerdruck pS absinkt, beispielsweise aufgrund einer Leckage im 2/2-Wege-Schaltventil 44, ist der Lösedruck pL höher und wird weiterhin über das Wechselventil 12 ausgesteuert. Die Federspeicherbremszylinder 24 bleiben belüftet.

Tritt nun ein Fehler auf, insbesondere ein Fehler in der elektronischen Steuereinheit ECU des Parkbremsmoduls 102, fällt das 2/2-Wege-Schaltventil 44 in die erste in Figur 4 gezeigte Schaltstellung zurück, in der es offen ist, sodass der Parkbremssteuerdruck pS direkt entlüftet wird, falls das Bistabilventil 42 in die erste in Figur 4 gezeigte Schaltstellung zurückgeschaltet wurde. Um nun ein direktes Einfallen der Federspeicherbremszylinder 24, das ein unmittelbares Blockieren der entsprechenden Fahrzeugachsen nach sich ziehen würde, zu verhindern, ist die Ausfallsicherheitsventileinheit 1 vorgesehen. Wenn das 2/2-Wege-Schaltventil 44 in die erste in Figur 4 gezeigte Schaltstellung zurückfällt, ist der Lösedruck pL höher als der Parkbremssteuerdruck pS, sodass der Lösedruck pL von dem Wechselventil 12 an der Hauptventileinheit 30 bereitgestellt wird. Da aber gleichzeitig auch das erst Schaltsignal SL1 wegfällt, fällt auch das erste 3/2-Wege-Löseventil 3 in die erste in Figur 4 gezeigte Schaltstellung, in der der erste Löseventilanschluss 2.1 mit dem dritten Löseventilanschluss 2.3 verbunden ist, der seinerseits mit dem Entlüftungsventil 4 verbunden ist. In diesem Fall wird der Lösedruckanschluss 110 entsprechend der nichtlinearen Entlüftungscharakteristik E (vgl. Figur 2) entlüftet, sodass das Fahrzeug zunächst mit dem ersten Gradienten G1 rasch abgebremst wird, ohne jedoch zu blockieren, und dann mit dem zweiten Gradienten G2 vollständig gebremst und zum Stehen gebracht wird.

Figur 5 zeigt ein zweites Ausführungsbeispiel der Parkbremsventilanordnung 100, das im Wesentlichen auf dem ersten Ausführungsbeispiel der Parkbremsventilanordnung 100 (Figur 4) beruht. Im Unterschied zum ersten Ausführungsbeispiel (Figur 4) ist im zweiten Ausführungsbeispiel (Figur 5) das Löseventil 2 nicht nur mit einem ersten 3/2-Wege-Löseventil 3, sondern auch mit einem zweiten 3/2-Wege-Löseventil 5 ausgebildet. In diesem Fall bildet das zweite 3/2-Wege-Löseventil 5 den ersten Löseventilanschluss 2.1, der hier wiederum mit dem Lösedruckanschluss 110 des Parkbremsmoduls 102 verbunden ist, aber auch unmittelbar mit dem ersten Wechselventilanschluss 12.2 verbunden sein kann. Die zweiten und dritten Löseventilanschlüsse 2.2, 2.3sind wie bereits mit Bezug auf Figur 4 beschrieben am ersten 3/2-Wege-Löseventil 3 ausgebildet und wieder in gleicher Weise verschaltet, nämlich so, dass der zweite Löseventilanschluss 2.2 mit dem Vorratsanschluss 20 verbunden ist und Vorratsdruck pV empfängt, und der dritte Löseventilanschluss 2.3 mit dem Entlüftungsventil 4 verbunden ist.

Auch das zweite 3/2-Wege-Löseventil 5 weist weitere Anschlüsse auf, nämlich einen vierten Löseventilanschluss 5.2 und einen fünften Löseventilanschluss 5.3. Der fünfte Löseventilanschluss 5.3 ist direkt mit dem Entlüftungsventil 4 verbunden, während der vierte Löseventilanschluss 5.2 mit dem ersten 3/2-Wege-Löseventil 3 verbunden ist, genauer gesagt mit einem sechsten Löseventilanschluss 2.4. Beide Ventile, das erste 3/2-Wege-Löseventil 3 und das zweite 3/2-Wege-Löseventil 5, sind so ausgelegt, dass sie stromlos in der in Figur 5 gezeigten ersten Schaltstellung sind, wobei jeweils der fünfte Löseventilanschluss 5.3 und der dritte Löseventilanschluss 2.3 mit dem Entlüftungsventil 4 verbunden sind. Die ersten und zweiten 3/2-Wege-Löseventile 3, 5 lassen sich durch erste und zweite Lösesignale SL1, SL2 in die jeweils zweite in Figur 5 nicht gezeigte Schaltstellung verbringen. Wird zunächst das erste 3/2-Wege-Löseventil 3 in die zweite in Figur 5 nicht gezeigte Schaltstellung verbracht, wird der zweite Löseventilanschluss 2.2 mit dem sechsten Löseventilanschluss 2.4 verbunden, sodass der Vorratsdruck pV über das erste 3/2-Wege-Löseventil an dem vierten Löseventilanschluss 5.2 bereitgestellt wird. Da aber das zweite 3/2-Wege-Löseventil 5 zu diesem Zeitpunkt noch in der ersten in Figur 5 gezeigten Schaltstellung ist, bleibt der Lösedruckanschluss 110 mit dem Entlüftungsventil 4 verbunden. Es wird kein Lösedruck pL an dem Wechselventil 12 und damit auch nicht an der Hauptventileinheit 30 ausgesteuert.

Für den umgekehrten Fall, dass nur das zweite Lösesignal SL2 bereitgestellt wird und nicht das erste Lösesignal SL1, das erste 3/2-Wege-Löseventil also in der ersten in Figur 5 gezeigten Schaltstellung verbleibt, schaltet nur das zweite 3/2-Wege-Löseventil 5 in die zweite in Figur 5 nicht gezeigte Schaltstellung. In dieser Stellung wird der erste Löseventilanschluss 2.1 mit dem vierten Löseventilanschluss 5.2 in Verbindung gebracht, sodass der Lösedruckanschluss 110 druckfluidisch mit dem sechsten Löseventilanschluss 2.4 des ersten 3/2-Wege-Löseventils 3 verbunden ist. Da dieses aber noch in der ersten in Figur 5 gezeigten Schaltstellung ist, wird der sechste Löseventilanschluss 2.4 mit dem dritten Löseventilanschluss 2.3 verbunden, der seinerseits mit dem Entlüftungsventil 4 verbunden ist, sodass wiederum der Lösedruckanschluss 110 druckfluidisch mit dem Entlüftungsventil 4 verbunden ist. Ein Lösedruck pL wird wiederum nicht an die Hauptventileinheit 30 ausgesteuert. Erst wenn sowohl das erste als auch das zweite 3/2-Wege-Löseventil 3, 5 in die jeweils zweiten in Figur 5 nicht gezeigten Schaltstellungen verbracht werden, wird der zweite Löseventilanschluss 2.2 druckfluidisch mit dem ersten Löseventilanschluss 2,1 verbunden, sodass der Lösedruck pL ausgesteuert wird. Das heißt, sobald entweder das erste Lösesignal SL1 oder das zweite Lösesignal SL2 wegfallen, wird der Lösedruckanschluss 110 über das Entlüftungsventil 4 entlüftet und das Fahrzeug kontrolliert abgebremst.

Auch wenn in dem in Figur 5 gezeigten Ausführungsbeispiel sowohl das erste als auch das zweite Lösesignal SL1, SL2 von der elektronischen Steuereinheit ECU des Parkbremsmoduls 102 bereitgestellt werden, soll verstanden werden, dass diese auch von verschiedenen Modulen bereitgestellt werden können. So ist es beispielsweise denkbar und bevorzugt, dass das zweite Lösesignal SL2 von einem Zentralmodul des Nutzfahrzeugs ausgesteuert wird.

Figur 6 illustriert nun ein Fahrzeug 200, insbesondere ein Nutzfahrzeug 202, das ein elektronisch steuerbares pneumatisches Bremssystem 204 aufweist. Das elektronisch steuerbare pneumatische Bremssystem 204 weist ein Zentralmodul 206 auf, das sowohl einen Vorderachsmodulator 208 als auch einen Hinterachsmodulator 212 steuert. An der Vorderachse VA sind erste und zweite Vorderachs-Betriebsbremszylinder 214a, 214b vorgesehen, an denen über den Vorderachsmodulator 208 ein Vorderachsbremsdruck pBVA ausgesteuert werden kann. An der Hinterachse HA sind ebenso Hinterachs-Betriebsbremszylinder 216a, 216b vorgesehen, die hier in kombinierten Zylindern zusammen mit den Federspeicherbremszylindern 24a, 24b untergebracht sind. Auch der Hinterachsmodulator 212 wird von dem Zentralmodul 206 ausgesteuert und stellt einen Hinterachsbremsdruck pBHA an den ersten und zweiten Hinterachs-Betriebsbremszylinder 216a, 216b bereit. Ferner ist an der Hinterachse HA eine Parkbremsventilanordnung 100 vorgesehen, mit einem Federspeicheranschluss 22, an dem der Federspeicherbremsdruck pF ausgesteuert wird. Die Parkbremsventilanordnung umfasst, wie oben beschrieben, ein Parkbremsmodul 102 und eine Ausfallsicherheitsventileinheit 1 nach einer der vorstehend beschriebenen Arten.

### Bezugszeichenliste (Teil der Beschreibung)

- 1: Ausfallsicherheitsventileinheit
- 2: monostabiles Löseventil
- 2.1: erster Löseventilanschluss
- 2.2: zweiter Löseventilanschluss
- 2.3: dritter Löseventilanschluss
- 2.4: sechster Löseventilanschluss
- 3: erstes 3/2-Wege-Löseventil
- 4: Entlüftungsventil
- 5: zweites 3/2-Wege-Löseventil
- 5.2: vierter Löseventilanschluss
- 5.3: fünfter Löseventilanschluss
- 6: Druckbegrenzer
- 7: Drossel
- 8: Parkbremsfunktion
- 10: Vorrat
- 12: Wechselventil
- 12.1: erster Wechselventilanschluss
- 12.2: zweiter Wechselventilanschluss
- 12.3: dritter Wechselventilanschluss
- 20: Vorratsanschluss
- 22: Federspeicheranschluss
- 24: Federspeicherbremszylinder
- 25: Parkbremseinheit
- 26: Handbremsventil
- 30: Hauptventileinheit
- 32: Relaisventil
- 32.1: Relaisventil-Vorratsanschluss
- 32.2: Relaisventil-Arbeitsanschluss
- 32.3: Relaisventil-Entlüftungsanschluss
- 32.4: Relaisventil-Steueranschluss
- 33: Entlüftung
- 40: Vorsteuerventileinheit
- 42: Bistabilventil
- 42.1: erster Bistabilventilanschluss
- 42.2: zweiter Bistabilventilanschluss
- 42.3: dritter Bistabilventilanschluss
- 44: 2/2-Wege-Schaltventil
- 44.1: erster Schaltventilanschluss
- 44.2: zweiter Schaltventilanschluss
- 100: Parkbremsventilanordnung
- 102: Parkbremsmodul
- 110: Lösedruckanschluss (Anti-Compound-Anschluss)
- 200: Fahrzeug
- 202: Nutzfahrzeug
- 204: elektronisch steuerbaren pneumatischen Bremssystems
- 206: Zentralmodul
- 208: Vorderachsmodulator
- 212: Hinterachsmodulator
- 214a, 214b: Vorderachs-Betriebsbremszylinder
- 216a, 216b: Hinterachs-Betriebsbremszylinder
- E: Entlüftungscharakteristik
- ECU: Elektronische Steuereinheit
- G1: erster Gradient
- G2: erster Gradient
- pBHA: Hinterachsbremsdruck
- pBVA: Vorderachsbremsdruck
- pF: Federspeicherbremsdruck
- pL: Lösedruck
- pLT: Teilbremsdruck
- pLV: Vollbremsdruck
- pS: Parkbremssteuerdruck
- pV: Vorratsdruck
- S1: erstes Schaltsignal
- S2: zweites Schaltsignal
- SL1: erstes Lösesignal
- SL2: zweites Lösesignal
- VA: Vorderachse
- HA: Hinterachse

## Patentansprüche

1. Ausfallsicherheitsventileinheit (1) für eine Parkbremsfunktion (8) eines elektronisch steuerbaren pneumatischen Bremssystems (204) für ein Nutzfahrzeug (202), wobei die Ausfallsicherheitsventileinheit (1) ein monostabiles Löseventil (2) und ein Entlüftungsventil (4) aufweist, wobei
das Löseventil (2) bestromt einen Lösedruck (pL) an einem ersten Löseventilanschluss (2.1) für die Parkbremsfunktion (8) bereitstellt und stromlos den ersten Löseventilanschluss (2.1) mit dem Entlüftungsventil (4) zum Entlüften des ersten Löseventilanschlusses (2.1) verbindet; und **dadurch gekennzeichnet, dass**
das Entlüftungsventil (4) eine nichtlineare Entlüftungscharakteristik (E) aufweist, die ein Entlüften des ersten Löseventilanschlusses (2.1) von dem Lösedruck (pL) auf einen Teilbremsdruck (pLT) mit einem ersten Gradienten (G1), und ein Entlüften des Löseventilanschlusses (2.1) von dem Teilbremsdruck (pLT) auf einen Vollbremsdruck (pLV) mit einem zweiten Gradienten (G2) erlaubt, wobei der erste Gradient (G1) größer als der zweite Gradient (G2) ist.

2. Ausfallsicherheitsventileinheit (1) nach Anspruch 1, wobei das Entlüftungsventil (4) mindestens einen Druckbegrenzer (6) und mindestens eine Drossel (7) aufweist, die parallel zum Druckbegrenzer (6) angeordnet ist und ein Überströmen des Druckbegrenzers (6) erlaubt.

3. Ausfallsicherheitsventileinheit (1) nach Anspruch 1 oder 2, wobei das Löseventil (2) ein erstes 3/2-Wege-Löseventil (3) mit einem zweiten Löseventilanschluss (2.2) und einem dritten Löseventilanschluss (2.3) aufweist, wobei der zweite Löseventilanschluss (2.2) zum Empfang von Vorratsdruck (pV) mit einem Vorrat (10) und der dritte Löseventilanschluss (2.3) mit dem Entlüftungsventil (4) verbunden ist.

4. Ausfallsicherheitsventileinheit (1) nach Anspruch 3, wobei das Löseventil (2) ein zweites 3/2-Wege-Löseventil (5) aufweist, welches den ersten Löseventilanschluss (2.1) aufweist.

5. Ausfallsicherheitsventileinheit (1) nach Anspruch 4, wobei das zweite 3/2-Wege-Löseventil (5) einen vierten Löseventilanschluss (5.2) und einen fünften Löseventilanschluss (5.3) aufweist, wobei der vierte Löseventilanschluss (5.2) mit dem ersten 3/2-Wege-Löseventil (3) verbunden ist, und der fünfte Löseventilanschluss (5.3) mit dem Entlüftungsventil (4) verbunden ist.

6. Ausfallsicherheitsventileinheit (1) nach einem der vorstehenden Ansprüche, aufweisend ein Wechselventil (12), das mit dem ersten Löseventilanschluss (2.1) zum Einsteuern des Lösedrucks (pL) in die Parkbremsfunktion verbunden ist.

7. Parkbremsventilanordnung (100) für ein elektronisch steuerbares pneumatisches Bremssystem (204) für ein Nutzfahrzeug (202), mit
einem Federspeicheranschluss (22) zum Anschließen wenigsten eines Federspeicherbremszylinders (24),
einem Vorratsanschluss (20) zum Empfangen von Vorratsdruck (pV),
einer Hauptventileinheit (30), die den Vorratsdruck (pV) empfängt und dazu ausgebildet ist, einen Federspeicherbremsdruck (pF) an dem Federspeicheranschluss (22) in Abhängigkeit von einem Parkbremssteuerdruck (pS) auszusteuern,
einer Vorsteuerventileinheit (40) zum Bereitstellen des Parkbremssteuerdrucks (pS), und
einer Ausfallsicherheitsventileinheit (1) nach einem der Ansprüche 1 bis 6, welche den Lösedruck (pL) an der Hauptventileinheit (30) aussteuert, wobei die Hauptventileinheit (30) ferner dazu ausgebildet ist, den Federspeicherbremsdruck (pF) in Abhängigkeit von dem Lösedruck (pL) auszusteuern.

8. Parkbremsventilanordnung (100) nach Anspruch 7, wobei die Ausfallsicherheitsventileinheit (1) ein Wechselventil (12) aufweist, das mit dem ersten Löseventilanschlusses (2.1) zum Empfang des Lösedrucks (pL), mit der Vorsteuerventileinheit (40) zum Empfang des Parkbremssteuerdrucks (pS) und mit der Hauptventileinheit (30) zum Aussteuern des jeweils höheren des Lösedrucks (pL) und des Parkbremssteuerdrucks (pS) an dieser verbunden ist.

9. Parkbremsventilanordnung (100) nach Anspruch 7 oder 8, wobei die Hauptventileinheit (30) ein Relaisventil (32) aufweist, mit einem mit dem Vorratsanschluss (20) verbundenen Relaisventil-Vorratsanschluss (32.1), einem mit dem Federspeicheranschluss (22) verbundenen Relaisventil-Arbeitsanschluss (32.2), einem mit einer Entlüftung (33) verbundenen Relaisventil-Entlüftungsanschluss (32.3) und einem den Parkbremssteuerdruck (pS) bzw. den Lösedruck (pL) empfangenden Relaisventil-Steueranschluss (32.4).

10. Parkbremsventilanordnung (100) nach einem der Ansprüche 7 bis 9, wobei die Vorsteuerventileinheit (40) ein Bistabilventil (42) aufweist, welches einen den Vorratsdruck (pV) empfangenden ersten Bistabilventilanschluss (42.1), einen den Parkbremssteuerdruck (pS) aussteuernden zweiten Bistabilventilanschluss (42.2) und einen mit einer oder der Entlüftung (33) verbundenen dritten Bistabilventilanschluss (42.3) aufweist.

11. Parkbremsventilanordnung (100) nach einem der Ansprüche 7 bis 10, wobei die Vorsteuerventileinheit (40) ein 2/2-Wege-Schaltventil (44) zum gestuften Entlüften und/oder Halten des Parkbremssteuerdrucks (pS) aufweist.

12. Parkbremsventilanordnung (100) nach einem der Ansprüche 7 bis 11, wobei die Vorsteuerventileinheit (40), die Hauptventileinheit (30) und eine elektronische Steuereinheit (ECU) zum Bereitstellen von Schaltsignalen (S1, S2) an der Vorsteuereinheit (40) gemeinsam in ein Parkbremsmodul (102) integriert sind.

13. Parkbremsventilanordnung (100) nach Anspruch 12, wobei die Ausfallsicherheitsventileinheit (1) an dem Parkbremsmodul (102) befestigt ist und das Löseventil (2) elektrisch mit der elektronischen Steuereinheit (ECU) verbunden ist.

14. Parkbremsventilanordnung (100) nach Anspruch 12 oder 13, wobei das Parkbremsmodul (102) einen Lösedruckanschluss (110) aufweist, der mit dem ersten Löseventilanschlusses (2.1) verbunden ist zum Empfang des Lösedrucks (pL).

15. Fahrzeug (200), insbesondere Nutzfahrzeug (202), mit einem elektronisch steuerbaren pneumatischen Bremssystem (204) und einer Parkbremsventilanordnung (100) nach einem der Ansprüche 7 bis 14.

## Claims

1. Failure safety valve unit (1) for a parking brake function (8) of an electronically controllable pneumatic brake system (204) for a commercial vehicle (202), the failure safety valve unit (1) comprising a monostable release valve (2) and a vent valve (4),
the release valve (2), when energized, providing a release pressure (pL) at a first release valve connection (2.1) for the parking brake function (8) and, when deenergized, connecting the first release valve connection (2.1) to the vent valve (4) in order to vent the first release valve connection (2.1); and **characterized in that**
the vent valve (4) has a non-linear venting characteristic (E) which allows venting of the first release valve connection (2.1) from the release pressure (pL) to a partial brake pressure (pLT) with a first gradient (G1), and venting of the release valve connection (2.1) from the partial brake pressure (pLT) to a full brake pressure (pLV) with a second gradient (G2), the first gradient (G1) being greater than the second gradient (G2).

2. Failure safety valve unit (1) according to claim 1, wherein the vent valve (4) comprises at least one pressure limiter (6) and at least one throttle (7) which is arranged parallel to the pressure limiter (6) and allows overflow of the pressure limiter (6).

3. Failure safety valve unit (1) according to either claim 1 or claim 2, wherein the release valve (2) comprises a first 3/2-way release valve (3) having a second release valve connection (2.2) and a third release valve connection (2.3), wherein the second release valve connection (2.2) is connected to a supply (10) in order to receive a supply pressure (pV) and the third solvent valve connection (2.3) is connected to the vent valve (4).

4. Failure safety valve unit (1) according to claim 3, wherein the release valve (2) comprises a second 3/2-way release valve (5) which comprises the first release valve connection (2.1).

5. Failure safety valve unit (1) according to claim 4, wherein the second 3/2-way release valve (5) comprises a fourth release valve connection (5.2) and a fifth release valve connection (5.3), wherein the fourth release valve connection (5.2) is connected to the first 3/2-way release valve (3), and the fifth release valve connection (5.3) is connected to the vent valve (4).

6. Failure safety valve unit (1) according to any of the preceding claims, comprising a shuttle valve (12) which is connected to the first release valve connection (2.1) for introducing the release pressure (pL) into the parking brake function.

7. Parking brake valve arrangement (100) for an electronically controllable pneumatic brake system (204) for a commercial vehicle (202), comprising
at least one spring accumulator connection (22) for connecting at least one spring brake cylinder (24),
a supply port (20) for receiving supply pressure (pV), a main valve unit (30), which receives the supply pressure (pV) and is designed to control a spring brake pressure (pF) at the spring accumulator connection (22) as a function of a parking brake control pressure (pS),
a pilot valve unit (40) for providing the parking brake control pressure (pS), and
a failure safety valve unit (1) according to any of claims 1 to 6, which controls the release pressure (pL) at the main valve unit (30), wherein the main valve unit (30) is further designed to control the spring brake pressure (pF) as a function of the release pressure (pL).

8. Parking brake valve arrangement (100) according to claim 7, wherein the failure safety valve unit (1) comprises a shuttle valve (12) which is connected to the first release valve connection (2.1) for receiving the release pressure (pL), to the pilot valve unit (40) for receiving the parking brake control pressure (pS), and to the main valve unit (30) for controlling the release pressure (pL) and the parking brake control pressure (pS) at the main valve unit.

9. Parking brake valve arrangement (100) according to either claim 7 or claim 8, wherein the main valve unit (30) comprises a relay valve (32) having a relay valve supply connection (32.1) connected to the supply connection (20), a relay valve working connection (32.2) connected to the spring accumulator connection (22), a relay valve vent connection (32.3) connected to a vent (33), and a relay valve control connection (32.4) which receives the parking brake control pressure (pS) or the release pressure (pL).

10. Parking brake valve arrangement (100) according to any of claims 7 to 9, wherein the pilot valve unit (40) comprises a bistable valve (42) which comprises a first bistable valve connection (42.1) which receives the supply pressure (pV), a second bistable valve connection (42.2) which controls the parking brake control pressure (pS), and a third bistable valve connection (42.3) which is connected to a vent or the vent (33).

11. Parking brake valve arrangement (100) according to any of claims 7 to 10, wherein the pilot valve unit (40) comprises a 2/2-way switching valve (44) for stepped venting and/or maintenance of the parking brake control pressure (pS).

12. Parking brake valve arrangement (100) according to any of claims 7 to 11, wherein the pilot valve unit (40), the main valve unit (30) and an electronic control unit (ECU) for providing switching signals (S1, S2) to the pilot control unit (40) are jointly integrated into a parking brake module (102).

13. Parking brake valve assembly (100) according to claim 12, wherein the failure safety valve unit (1) is attached to the parking brake module (102) and the release valve (2) is electrically connected to the electronic control unit (ECU).

14. Parking brake valve arrangement (100) according to either claim 12 or claim 13, wherein the parking brake module (102) comprises a release pressure connection (110) which is connected to the first release valve connection (2.1) for receiving the release pressure (pL).

15. Vehicle (200), in particular a commercial vehicle (202), comprising an electronically controllable pneumatic brake system (204) and a parking brake valve arrangement (100) according to any of claims 7 to 14.

## Revendications

1. Unité de soupapes de sécurité en cas de défaillance (1) pour une fonction de frein de stationnement (8) d'un système de freinage pneumatique (204) pouvant être commandé électroniquement pour un véhicule utilitaire (202), dans laquelle l'unité de soupapes de sécurité en cas de défaillance (1) présente une soupape de desserrage (2) monostable et une soupape de ventilation (4), dans laquelle
lorsqu'elle est alimentée, la soupape de desserrage (2) fournit une pression de desserrage (pL) au niveau d'un premier raccord de soupape de desserrage (2.1) pour la fonction de frein de stationnement (8) et relie sans alimentation le premier raccord de soupape de desserrage (2.1) à la soupape de ventilation (4) pour la ventilation du premier raccord de soupape de desserrage (2.1) ; et **caractérisée en ce que**
la soupape de ventilation (4) présente une caractéristique de ventilation non linéaire (E) qui permet une ventilation du premier raccord de soupape de desserrage (2.1) à partir de la pression de desserrage (pL) à une pression de freinage partielle (pLT) comportant un premier gradient (G1) et une ventilation du raccord de soupape de desserrage (2.1) à partir de la pression de freinage partielle (pLT) à une pression de freinage totale (pLV) comportant un second gradient (G2), le premier gradient (G1) étant supérieur au second gradient (G2).

2. Unité de soupapes de sécurité en cas de défaillance (1) selon la revendication 1, dans laquelle la soupape de ventilation (4) présente au moins un limiteur de pression (6) et au moins un étranglement (7) qui est disposé parallèlement au limiteur de pression (6) et qui permet un débordement du limiteur de pression (6).

3. Unité de soupapes de sécurité en cas de défaillance (1) selon la revendication 1 ou 2, dans laquelle la soupape de desserrage (2) présente une première soupape de desserrage à 3/2 voies (3) comportant un deuxième raccord de soupape de desserrage (2.2) et un troisième raccord de soupape de desserrage (2.3), le deuxième raccord de soupape de desserrage (2.2) étant relié à une réserve (10) pour la réception d'une pression de réserve (pV) et le troisième raccord de soupape de desserrage (2.3) étant relié à la soupape de ventilation (4).

4. Unité de soupapes de sécurité en cas de défaillance (1) selon la revendication 3, dans laquelle la soupape de desserrage (2) présente une seconde soupape de desserrage à 3/2 voies (5) qui présente le premier raccord de soupape de desserrage (2.1).

5. Unité de soupapes de sécurité en cas de défaillance (1) selon la revendication 4, dans laquelle la seconde soupape de desserrage à 3/2 voies (5) présente un quatrième raccord de soupape de desserrage (5.2) et un cinquième raccord de soupape de desserrage (5.3), le quatrième raccord de soupape de desserrage (5.2) étant relié à la première soupape de desserrage à 3/2 voies (3), et le cinquième raccord de soupape de desserrage (5.3) étant relié à la soupape de ventilation (4).

6. Unité de soupapes de sécurité en cas de défaillance (1) selon l'une des revendications précédentes, présentant une soupape à deux voies (12) reliée au premier raccord de soupape de desserrage (2.1) pour la commande de la pression de desserrage (pL) dans la fonction de frein de stationnement.

7. Agencement de soupapes de frein de stationnement (100) pour un système de freinage pneumatique (204) pouvant être commandé électroniquement pour un véhicule utilitaire (202), comportant
un raccord d'accumulateur à ressort (22) pour le raccordement d'au moins un cylindre de frein à accumulateur à ressort (24),
un raccord de réserve (20) pour la réception d'une pression de réserve (pV),
une unité de soupape principale (30) qui reçoit la pression de réserve (pV) et qui est conçue pour commander une pression de frein à accumulateur à ressort (pF) au niveau du raccord d'accumulateur à ressort (22) en fonction d'une pression de commande de frein de stationnement (pS),
une unité de soupape pilote (40) permettant de fournir la pression de commande de frein de stationnement (pS), et
une unité de soupapes de sécurité en cas de défaillance (1) selon l'une des revendications 1 à 6 qui commande la pression de desserrage (pL) au niveau de l'unité de soupape principale (30), l'unité de soupape principale (30) étant en outre conçue pour commander la pression de frein à accumulateur à ressort (pF) en fonction de la pression de desserrage (pL).

8. Agencement de soupapes de frein de stationnement (100) selon la revendication 7, dans lequel l'unité de soupapes de sécurité en cas de défaillance (1) présente une soupape à deux voies (12) reliée au premier raccord de soupape de desserrage (2.1) pour la réception de la pression de desserrage (pL), à l'unité de soupape pilote (40) pour la réception de la pression de commande de frein de stationnement (pS) et à l'unité de soupape principale (30) pour la commande de la pression respectivement la plus élevée parmi la pression de desserrage (pL) et la pression de commande de frein de stationnement (pS).

9. Agencement de soupapes de frein de stationnement (100) selon la revendication 7 ou 8, dans lequel l'unité de soupape principale (30) présente une soupape relais (32), comportant un raccord de réserve de soupape relais (32.1) relié au raccord de réserve (20), un raccord de travail de soupape relais (32.2) relié au raccord d'accumulateur à ressort (22), un raccord de ventilation de soupape relais (32.3) relié à un évent (33) et un raccord de commande de soupape relais (32.4) recevant la pression de commande de frein de stationnement (pS) ou la pression de desserrage (pL).

10. Agencement de soupapes de frein de stationnement (100) selon l'une des revendications 7 à 9, dans lequel l'unité de soupape pilote (40) présente une soupape bistable (42) qui présente un premier raccord de soupape bistable (42.1) recevant la pression de réserve (pV), un deuxième raccord de soupape bistable (42.2) commandant la pression de commande de frein de stationnement (pS) et un troisième raccord de soupape bistable (42.3) relié à un évent ou à l'évent (33).

11. Agencement de soupapes de frein de stationnement (100) selon l'une des revendications 7 à 10, dans lequel l'unité de soupape pilote (40) présente une soupape de commutation à 2/2 voies (44) permettant la ventilation et/ou la retenue de manière étagée de la pression de commande de frein de stationnement (pS).

12. Agencement de soupapes de frein de stationnement (100) selon l'une des revendications 7 à 11, dans lequel l'unité de soupape pilote (40), l'unité de soupape principale (30) et une unité de commande électronique (ECU) permettant de fournir des signaux de commutation (S1, S2) à l'unité pilote (40) sont intégrées ensemble dans un module de frein de stationnement (102).

13. Agencement de soupapes de frein de stationnement (100) selon la revendication 12, dans lequel l'unité de soupapes de sécurité en cas de défaillance (1) est fixée au module de frein de stationnement (102) et la soupape de desserrage (2) est reliée électriquement à l'unité de commande électronique (ECU).

14. Agencement de soupapes de frein de stationnement (100) selon la revendication 12 ou 13, dans lequel le module de frein de stationnement (102) présente un raccord de pression de desserrage (110) relié au premier raccord de soupape de desserrage (2.1) pour la réception de la pression de desserrage (pL).

15. Véhicule (200), en particulier véhicule utilitaire (202), comportant un système de freinage pneumatique (204) pouvant être commandé électroniquement et un agencement de soupapes de frein de stationnement (100) selon l'une des revendications 7 à 14.
